# EUROPEAN PATENT APPLICATION

(11) **EP 2 478 754 A1**
(43) Date of publication of application: **25.07.2012**
(21) Application number: 11404001.7
(22) Date of filing: 21.06.2011
(51) Int. Cl.: A01B 27/00, A01B 29/04

(54) **Rotary harrow (roller) with helical leaf spring for soil cultivation combinations**

(30) Priority: 20.01.2011 TR 201100558
(71) Applicant: Ilgi Tarim Makinalari Sanayi Ve Ticaret Limited Sirketi, Soke-Aydin (TR)
(72) Inventor: Ilgi, Sahin, Soke-Aydin (TR)
(74) Representative: Yavan, Nuriye

(57) **Abstract**

The invention relates to a rotary harrow (roller) with helical leaf spring (4) for soil cultivation combinations. Machine combinations that can perform more than one operation in one pass are important in terms of reducing soil cultivation costs in agricultural production. Rotary harrow with helical leaf spring acting as the last operator in a combination mixes the soil and the plant residues homogenously in a stubble, and has a structure which does not spoil the evenness of the field through its special spring arrangement, and which breaks up the surface soil and performs a flexible compaction on the surface, not at the bottom.

## Description

### TECHNICAL FIELD

The present invention relates to a rotary harrow (roller) with helical leaf spring that can be operated in combination with soil cultivation machines with various tillage implements in soil cultivation.

### BACKGROUND ART

First cultivation to prepare the field for planting had been made with plow and the second cultivation had been made with cultivator and then the surface had been leveled with harrow. Performing these operations separately in terms of time and by means of separate equipment means individual cost per process. Today, soil cultivation combinations that carry out these operations simultaneously are used. These combinations generally consist of blades which sliver plant residues and mix them with the soil and also till the soil, partially toppling it, through puffing it up with a certain depth as well as harrows (rollers) that level the soil through breaking up large clods forming during tillage. Machines that are designed to till the soil and prepare it for planting are known in the current state of the art.

In Turkish Utility Model No. TR 2003 01537 U, an automatic spring-chisel combination hitched to the back of the tractor is mentioned. Such combination consists of a chassis that is hitched to the back of the tractor and that carries an automated spring-chisel combination on itself, a slivering roller that slivers plant residues remaining from harvest period and mixes them with the soil before plowing, a roller that provides leveling of the surface through breaking up large clods, a dovetail and a wrist section that carries chisel blades on it. The operation of breaking-up large clods in the roller which is described in the utility model, and which levels the soil, is carried out by means of blade-shaped harrow teeth.

A soil cultivation and seeding machine is described in European Patent No. EP 0998185 B1. According to this, a cleaning tool, preferably in the form of a breaking-up roller with breaking-up elements, later on cleans the materials accumulated between the harrow teeth and keeps such materials far from seeding elements. Harrow teeth or leveling elements prevent from clogging due to organic material. The cleaning or breaking-up elements, which have been structured flexibly in a peripheral direction, work along with a fixed stop so as to avoid any damage caused by the impact of any obstacle. A fixed leveling element is inserted between each rotating breaking-up element so that the said leveling element exerts pressure on the soil and pushes down the seeds. This reduces the number of required breaking-up elements by halve. Harrow duty in the roller described in the present patent is carried out by spring sections in the form of a quadrant. One end of the spring sections is connected to the spring connecting element and the other end is free. Spring sections connected in a sequence look like a circle. The whole harrow consists of circles arranged side by side on the shaft.

### TECHNICAL PROBLEMS ADDRESSED BY THE INVENTION

In stubble-plowing or seed bed preparation with rotary harrow used in soil cultivation combinations, sufficient evenness should be achieved that provides sufficient breaking-up in the soil and that does not spoil evenness of the surface.

Compaction effect of the roller in the plant root area within the soil should not be at a level preventing germination and growth of the plants. On the other hand, loose structure under the compaction layer is ideal, which prevents water loss in the surface.

The invention aims to meet the said soil requirements through the rotary harrow with helical leaf spring and roller elements that are arranged helically with a certain angle. Compact soil, prevents water loss due to evaporation on the soil surface, is obtained on the surface, and highly loose structure with high water retention capacity, which does not prevent plant growth, is obtained in the root area.

Helical arrangement of the flexible roller elements with springs properly rolls over without interruption and impact, does not spoil evenness of the field and provides better breaking-up by means of vibration effect they cause. As a result of the fact that the springs are attached from the middle and that both ends are free, the roller element is provided with a spring effect in both insertion in the soil and coming out of the soil.

### BRIEF DESCRIPTION OF THE DRAWINGS

For the purpose of aiding to better understand the subject of the present invention, the rotary harrow (roller) with helical leaf spring for soil cultivation combination, drawings are attached, in which;

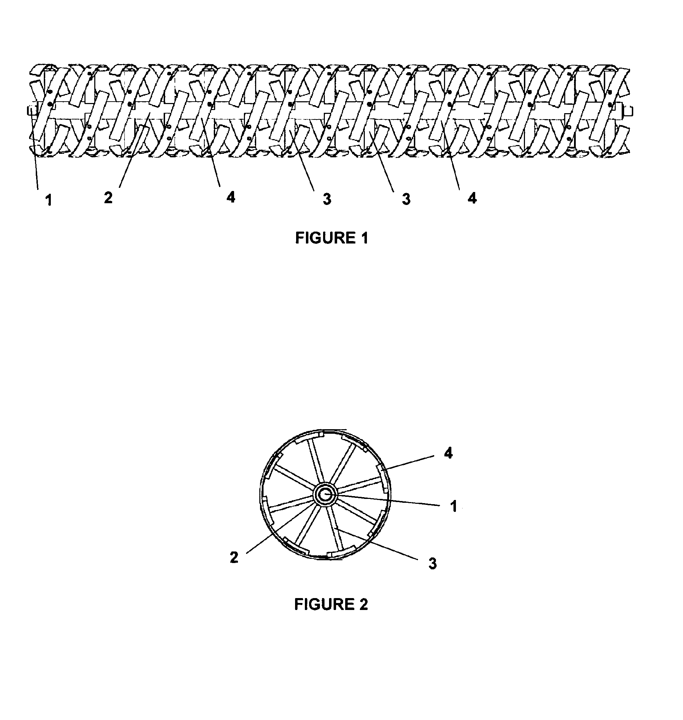

Figure 1 is a front view of the harrow,
Figure 2 is a side view of the harrow.

### REFERENCE NUMBERS

1. Roller bearing shaft
2. Roller tube
3. Spring connection sheet bars
4. Roller helical springs

### DESCRIPTION OF THE INVENTION

The roller has been bedded from its two ends with the bearing shaft (1), and spring connecting sheet bars (3) have been arranged on the roller tube (2) by means of welding at equal distances apart from one another. The roller acting as the harrow (roller) has been connected to the spring connection sheet bars (3) with two bolts at the center of the helical springs (4) in accordance with the helical angle. Since both ends of the springs are free, it is enabled that springback effect occurs in both insertion in the soil and coming out of the soil. The design and arrangement dimensions of the springs are made in such a way that they constitute a helix on the overall harrow. With this design, it is aimed that no uncultivated area will be left on the soil surface and a homogenous mixture of plant residues and the soil is obtained in the cultivated area. Besides, by means of flexion effect of the helical springs (4), no soil compaction occurs in the root area of the plants and an even soil surface is obtained.

## Claims

1. A rotary harrow (roller) with spring which is operable in combination with the soil cultivation machines, being **characterized in that it** comprises a roller bearing shaft (1), a roller tube (2), spring connection sheet bars (3), and roller helical springs (4).

2. The rotary harrow (roller) with spring, according to Claim 1, which is operable in combination with the soil cultivation machines, being **characterized in that** the roller helical springs (4) have a helical design and an arrangement on the roller, which ensure that a proper and non-impact rolling is provided, and that no uncultivated area is left on the soil surface.

3. The rotary harrow (roller) with spring, according to Claim 1, which is operable in combination with the soil cultivation machines, being **characterized in that** roller helical springs (4) are connected to the spring connection sheet bars (3) with two bolts at the center in such a way that both ends are free in accordance with the helical angle.
